# EUROPEAN PATENT APPLICATION

(11) **EP 1 864 866 A1**
(43) Date of publication of application: **12.12.2007**
(21) Application number: 06011598.7
(22) Date of filing: 06.06.2006
(51) Int. Cl.: B60R 19/26

(54) **Device for absorbing energy**

(71) Applicant: Corus Staal BV, 1970 CA Ijmuiden (NL)
(72) Inventor: Baldwin, Michael John, Warwick Warwickshire CV34 6HL (GB); Clough, Andrew Jonathan, Stratford upon Avon CV37 7HU (GB)
(74) Representative: Kruit, Jan

(57) **Abstract**

The invention relates to a device for absorbing energy during crash of a transportation means, such as an automobile.
According to the invention, the device comprises a switching part which has been designed and fabricated such that it changes position in the device above a predetermined crash deceleration due to the inertia of the switching part, resulting in the device absorbing less energy at a crash deceleration below the predetermined crash deceleration than above the predetermined crash deceleration.

## Description

The invention relates to a device for absorbing energy during crash of a transportation means, such as an automobile.

Nowadays all automobiles are designed to protect their occupants with a 'crush zone' and a 'safety cell'. The crush zone is in front of the passenger compartment and is designed to absorb the energy of a crash of the automobile by folding, deformation and/or destruction of material. The passenger compartment, also known as the safety cell, surrounds the occupants and should remain undamaged during the crash.

The crush zone and safety cell have been developed across the industry to accommodate crash events based on current and forthcoming legislation. Recent European legislation is intended to reduce injuries to pedestrians struck by automobiles. One of the areas affected by this legislation is the automobile bumper that is required to have a deflection behaviour that reduces the acceleration forces on the leg of the pedestrian at the currently legislated test impact speed of 35 km/h. The distance needed to achieve low leg acceleration takes up a large part of the length of the distance from bumper to safety cell that otherwise could be used for the automobile's crush zone.

Automobiles are also designed to be repaired at low cost after low speed impacts, at e.g. 15 kph, for this reason automobiles have crash cans that attach the bumper beam to the vehicle frame. In a low speed crash the crush cans absorb energy by folding and are easily and cheaply replaced. These crash cans occupy space (typically 100mm to 200mm) in front of the crush zone.

To modify the automobile's crush zone in the event of a crash, it has been proposed to use sensors to trigger a different mode of crushing in the crush zone at higher speeds. The sensor system overrides the low speed and pedestrian safety impact zones and provides high energy absorption at higher speeds. The sensors can trigger a spring loaded lower bumper, or cause rotation of an element within the automobile's crushing member, or set off explosive charges or air bags that change the shape of the structural rails, for instance.

The use of sensors has the disadvantage that sensors with the required wiring, connections and processor control are expensive. Moreover, sensors are sensitive components that need control and repair.

It has also been proposed to use a hydraulic system to absorb energy in a crash, which can be varied according to the type of crash.

Hydraulics need large and heavy hydraulic cylinders and piping, which appear too heavy and costly to be used in a passenger vehicle.

Hydraulic systems and pyrotechnic systems require expensive specialist dismantling provisions at the end of the vehicle's life.

It is an object of the present invention to provide a device for absorbing energy for a transportation means that is simple, affordable and reliable.

It is another object of the invention to provide a device for absorbing energy for a transportation means that does not need the use of electronic devices and/or sensors.

It is a further object of the invention to provide a device for absorbing energy for a transportation means that provides an optimal use of the crush zone of the transportation means.

According to the invention, one or more of these objects is reached with a device for absorbing energy during crash of a transportation means, such as an automobile, wherein the device comprises a switching part which has been designed and fabricated such that it changes position in the device above a predetermined crash deceleration due to the inertia of the switching part, resulting in the device absorbing less energy at a crash deceleration below the predetermined crash deceleration than above the predetermined crash deceleration.

In the device according to the invention, the switching part functions as a result of the inertia of the switching part. Due to the inertia of the switching part, above a predetermined deceleration the switching part has a different position as compared to the position below the predetermined deceleration. This different position is used to change the stiffness of the device, such that above the predetermined deceleration the device has a higher stiffness and can absorb more crash energy.

According to a preferred embodiment, the device comprises two elongated elements that are free to slide relative to one another, the switching part being attached to one of the elements such that above the predetermined crash deceleration the two elements are coupled by the switching part and one or both of the elements deform. The switching part thus decouples the elements when the deceleration is low in a low speed crash, and couples the elements when the deceleration is high in a high-speed crash.

Preferably one of the elongated elements is connected to the front of the transportation means and the other elongated element is connected to a passenger compartment of the transportation means. When the switching part couples the elements, the front of the transportation means is thus coupled to the passenger compartment, and the crash energy is absorbed by deformation of the element(s).

According to a preferred embodiment the elongated elements are concentric tubular elements. Concentric tubular elements can slide easily and will deform in a predetermined manner. However, otherwise formed elements are also possible, such as those having polygonal cross section.

According to a first embodiment the switching part comprises locking pawls, which are attached to one of the elements by a spring-like mechanism, the locking pawls being pushed in locking engagement with the other element above the predetermined crash deceleration. Due to the deceleration, the inertia of the locking pawls forces the locking pawls against the other elements, against the spring force of the spring-like mechanism, and thus the locking pawls couple the two elements.

Preferably here a sloping surface on the one element is present for guiding the locking pawls. More preferably a pivot on the one element is present for rotatably guiding the locking pawls.

According to a second embodiment the switching part comprises spring disks and a slidable ring on one of the elements, the spring disks being pushed into locking engagement with the other element by the slidable ring above the predetermined crash deceleration. Here the slidable ring is the inertial element that only moves above the predetermined crash deceleration.

According to another preferred embodiment the device comprises two elongated elements that are free to slide relative to one another, the switching part being attached to one of the elements such that above the predetermined crash deceleration the other element is plastically deformed by the switching part. According to this preferred embodiment the switching element not only couples the two elements, but after that also plastically deforms the element to which it is coupled.

Preferably one of the elongated elements is connected to the front of the transportation means and the other elongated element is connected to a passenger compartment of the transportation means, as in the first preferred embodiment. Here, too, preferably the elongated elements are concentric tubular elements.

Preferably the switching part comprises rigid punch elements and a slidable ring on one of the elongated elements, the rigid punch elements being pushed into the other element by the slidable ring above the predetermined crash deceleration to deform the other element during the sliding of the two elongated elements. The inertia of the slidable ring here forces the rigid punch elements into the other element above the predetermined crash deceleration, and keeps the rigid punch elements in this position during the sliding of the one elongated element into the other.

Preferably the rigid punch elements are balls, more preferably steel balls.

When a slidable ring and rigid punch elements are used, preferably a sloping surface on the one element is present for guiding the rigid punch elements.

According to a preferred embodiment, when two elongated elements are used that are free to slide relative to one another, the switching part being attached to one of the elements such that above the predetermined crash deceleration the two elements are coupled by the switching part and one or both of the elements deform, a plastically deformable element has been placed between the two elongated elements so as to deform below the predetermined crash deceleration. This plastically deformable element will absorb crash energy during a crash with a deceleration below the predetermined crash deceleration.

Preferably at least one of the elongated elements is a tube of high strength/high ductility steel which is stretched during the absorption of energy, more preferably the high strength/high ductility steel being HSD steel. These steel types harden at a higher rate than their reduction in cross section, so they can be stretched without breaking and thus are highly efficient for the absorption of energy.

According to a preferred embodiment, at least one of the elongated elements is essentially tubular, having a variable cross section along its length. This provides a predetermined increase or decrease in energy absorption capacity along the length of the elements.

According to another preferred embodiment, at least one of the elongated elements is essentially tubular, having a variable wall thickness along its length. This provides the same advantages.

According to a possibly advantageous embodiment an electrical switching system is provided to initialize the locking part to change position. This electrical switching system can change the position of the switching part and thus start the absorption of the crash energy before the inertia of the switching part activates the switching part, which can be advantageous in certain crash situations.

For instance, the electrical switching system has been installed to be controlled by the speed of the transportation means.

According to another possibility, the electrical switching system has been installed to be controlled by a sensing system using satellite, GSM navigation, ultrasound, infrared or radar.

Preferably, the electrical switching system uses stored power already present in the transportation means, e.g. within the braking or ABS system, within the air conditioning circuit or by means of air pressure stored in the spare wheel. Thus no separate power supply is needed for the switching system.

The electrical switching system can be arranged to have at least two settings allowing for at least two levels of energy absorption by the switching system.

The invention also relates to a transportation means, such as an automobile, provided with the device according to any one of the embodiments above.

The invention will be elucidated referring to the accompanying drawings.
Fig 1a - 1d show the principle of coupling two elongated elements above the predetermined crash deceleration using a switching part, after which an element deforms.
Fig 2a - 2d show the principle of coupling two elongated elements above the predetermined crash deceleration using a switching part, after which an element is plastically deformed by the switching part.
Fig 3a - 3e show an embodiment of the principle of fig 2 using balls, which use inertia to lock the elongated elements and then go on to absorb energy through both yielding of the plastically deformable elements and friction between the balls and the deformable element.
Fig 4a - 4d show an embodiment of the principle of Fig 1 using locking rings.
Fig 5a - 5d show an embodiment of the principle of Fig 1 using locking pins and a plastically deformable element for deformation below the predetermined crash deceleration.
Fig 6a - 6d show an embodiment of the principle of Fig 1 using locking pawls.
Fig 7a - 7d show an embodiment of the principle of Fig 1 using locking pawls switching a deformable element that absorbs energy through stretching as well as a compressively deformable element for deformation below the predetermined crash deceleration.

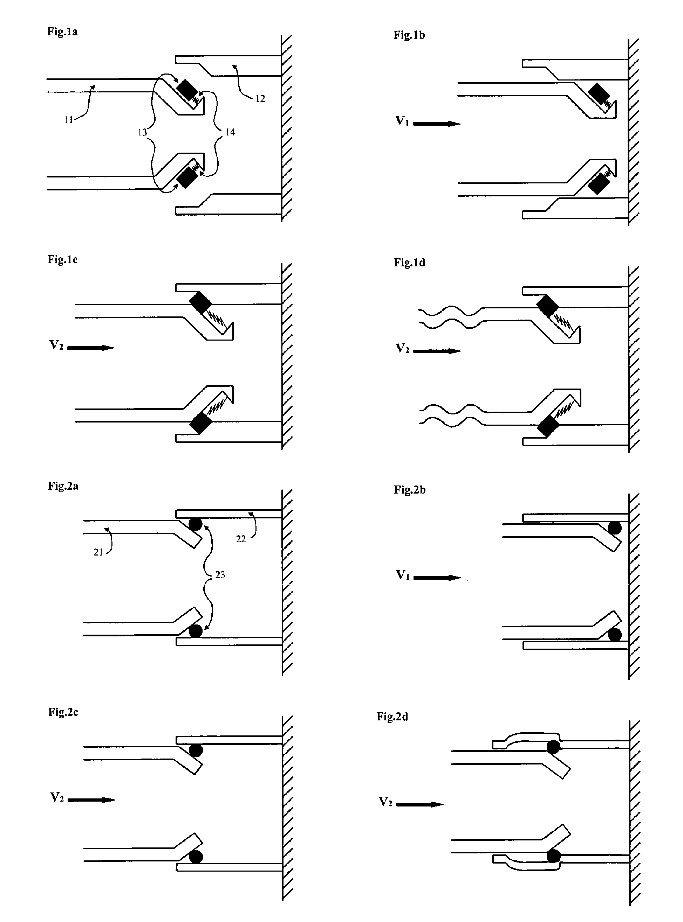

Figure 1 schematically shows the basis principle of the inertia locking mechanism. Fig 1a shows the device for absorbing energy consisting of a tube-like element 11 that is connected to for instance the bumper, and a tube-like element 12 that is connected to for instance the passenger compartment of a vehicle. Element 11 can slide freely in element 12. Locking pawls 13 are connected to the free end of element 11 by means of springs 14. During normal use of the vehicle, the situation remains as shown in Fig 1a.

Fig 1b shows the situation at a collision with a low velocity V1. Due to the low velocity, the deceleration is low and remains below the predetermined crash deceleration. Thus, the locking pawls 13 are kept in place by the springs, because the inertia times the deceleration of the locking pawls is too low to stretch the springs. The element 11 will thus freely slide in the element 12 and little damage is done to the vehicle at low speed. As a further consequence of this sliding distance, little damage is done to a pedestrian impacted by the vehicle. Fig 1c shows what happens when a collision occurs at a high velocity V2. Now, the deceleration will be above the predetermined crash deceleration. The inertia of the locking pawls 13 now is high enough to overcome the force of the springs 14, and the locking pawls 13 slide outwards and lock the elements 11 and 12 together. Thus element 11 cannot slide into element 12 anymore, and the crash of the vehicle results in the deformation and shortening of element 11, as shown in Fig 1d. In this way at higher speed and higher deceleration during a crash, more energy is absorbed then during a crash at lower speed and lower deceleration.

Figure 2 shows the same principle, but in a different embodiment. Fig 2a shows a tube-like element 21 attached to a bumper that can slide freely into a tube-like element 22 attached to a passenger compartment of a vehicle, as in Fig 1. The free end of element 21 holds hardened steel balls 23 that can slide in element 22. During normal use of the vehicle, the situation remains as shown in Fig 2a.

Fig 2b shows the situation at a collision with a low velocity V1. The deceleration is thus low, and the balls 23 remain in place relative to element 21. Element 21 will thus freely slide into element 22 and little damage is done to the vehicle at low speed. As a further consequence of this sliding distance, little damage is done to a pedestrian impacted by the vehicle. The situation for a collision with a high velocity V2 is shown in Fig 2c. Due to the high velocity, during a crash the deceleration will be high, and the inertia of the balls 23 will force them outwards over the inclined end of element 21, into tube 22. The balls 23 thus couple element 21 to element 22. From that moment on, during the crash the balls 23 are forced to deform element 22 due to the movement of element 21, as shown in Fig 2d, and in that way a lot of energy is absorbed during the crash.

With the device for absorbing energy of which the principle is shown above, two different crush modes are realised. With low speed impact, the tube-like elements are not coupled and the response of the vehicle is much softer than with high speed impacts, resulting in reduced damage to the vehicle as well as reduced pedestrian leg injuries at low speed, and at high speed impacts the tube-like elements are coupled resulting in a high energy absorbing device.

It will be understood that the above embodiment may be altered without departing from the spirit of the invention. For instance, it will be possible to use rigid punch elements that have a form different from the form of a ball, such as a cylinder.

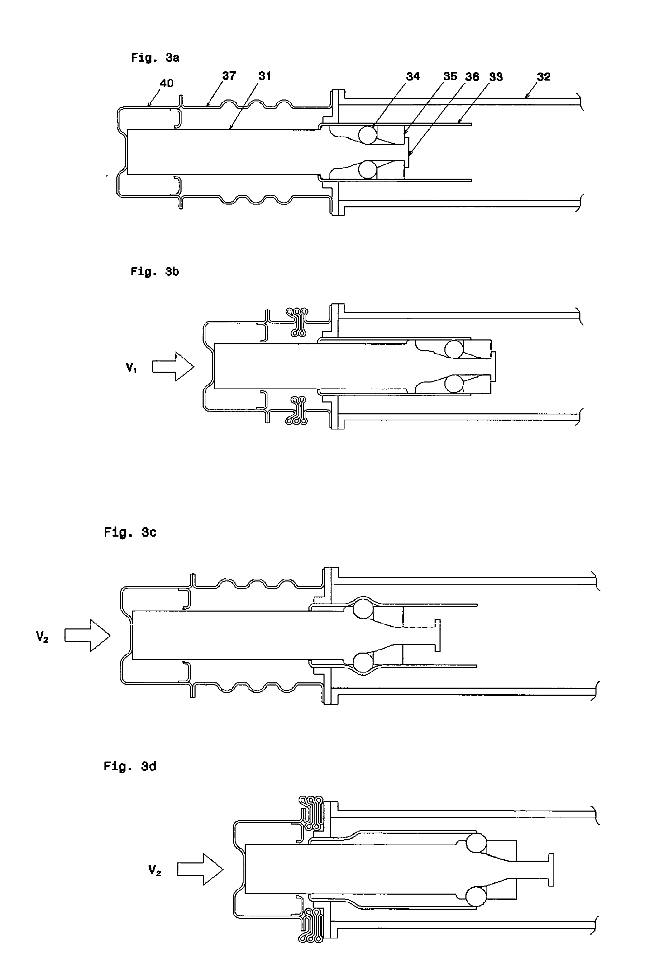

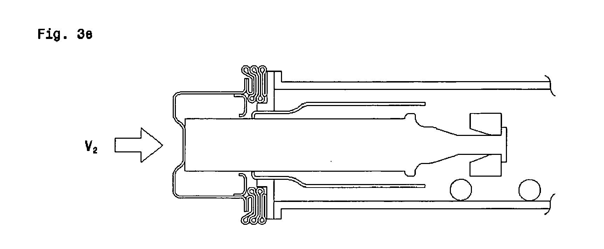

A number of embodiments of the principle as shown above is elucidated with reference to the figures 3, 4, 5, 6 and 7.

Fig 3a shows the device according to the invention 30, having an actuation rod 31 attached to a bumper beam 40. The other end of the actuation rod 31 is placed inside a deformable tube 33. Three or more balls 34 are positioned around a conical end of the actuation rod 31 and kept in place by an annular mass 35 that can slide over an extension of the conical end of the actuation rod 31. These components are for instance placed inside a front longitudinal 32 of the vehicle. During normal use of the vehicle, the situation remains as shown in Fig 3a.

Fig 3b shows the situation at a collision with low velocity V1. The deceleration is low and the balls 34 and annular mass 35 remain in place on the conical end and the extension of the actuation rod 31. The actuation rod 31 thus can slide freely in the deformable tube 33, and the bumper 40 can travel over the full length of the actuation rod 31 under the low force required to crush the crush can 37, as such when the vehicle is in collision with a pedestrian or a stationary object. The crush can 37 is easily replaced at low cost.

Fig 3c shows what happens when a collision occurs at a high velocity V2. Due to the high velocity, at a crash the deceleration will be high. The balls 34 and the annular mass 35 keep their position due to their inertia, but the actuation rod 31 accelerates rapidly between them. The balls 34 are thus forced outwards over the conical end into the deformable tube 33, as shown in Fig 3c. When the actuation rod 31 moves on, the balls 34 are forced though the deformable tube 33 and expand this tube, whereby friction and deformation energy is absorbed. Thus above the predetermined crash deceleration a lot of energy is absorbed during a crash. Fig 3e shows that the crash element according to the invention continues to absorb energy until the balls 34 pass out of the end of the deformable tube 33; after the crash element is fully used the normal crush of the front longitudinal 32 can still take place. The energy absorbed is now much higher being the energy to crush the crush can 37 plus the frictional and deformational energy required to expand tube 33.

It can be seen that energy can be absorbed by deformation methods such as tube expansion, tube stretching or a combination of both.

Absorption of energy by stretching is highly efficient and requires a material that work hardens at a higher rate than it reduces in cross section. Materials that exhibit such behaviour may be polymeric such as certain grades of polyethylene (LDPE), or metallic such as austenitic steel. Austenitic steel suitable for manufacture into energy absorbing parts for vehicles is austenitic manganese steel known as HSD (High Strength Ductile). This family of steel is described as TWIP steel having remarkable levels of ductility as a result of TWinning Induced Plasticity.

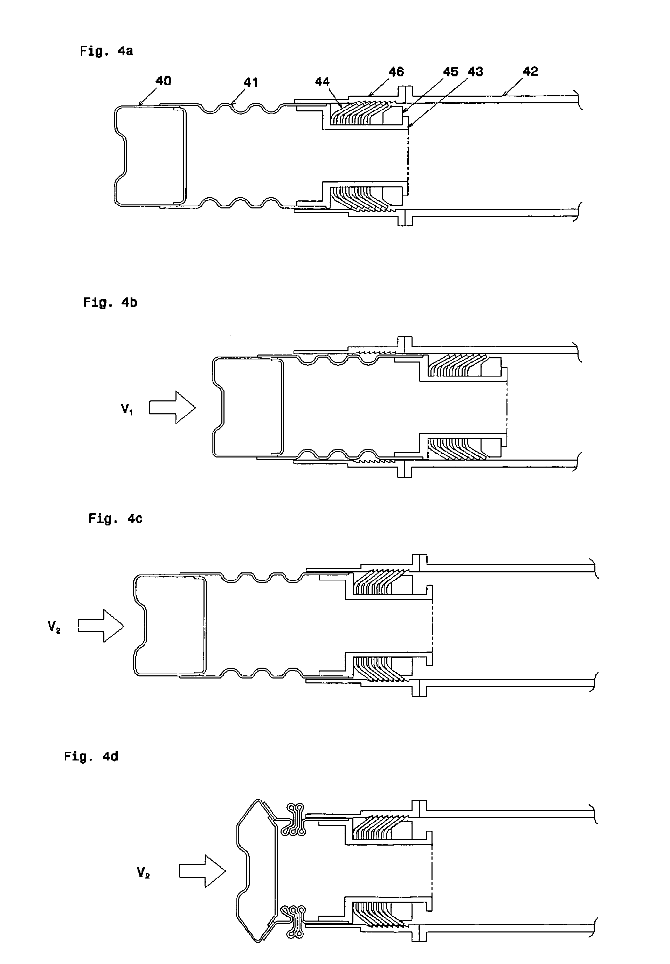

Fig 4a shows a crash energy absorbing device according to the invention having a bumper 40, a crushable tube 41 that can slide freely into a mounting tube 42 and an extension 46 on the mounting tube 42. The mounting tube 42 is attached to a vehicle. Attached to the end of the crushable tube 41 is mounted a locking device, made up of a tubular section 43 carrying several large spring steel rings 44 or washers, similar to 'Belleville' type washers, stacked onto one another in a nested fashion. An annular mass 45 is mounted coaxially with the rings, at the end of the tubular section 43. During normal use of the vehicle the situation remains as shown in Fig 4a.

Fig 4b shows the situation at a collision with low velocity V1. The deceleration is low, so the steel rings 44 and the annular mass 45 remain in place on the tubular section 43 and slide into the mounting tube 42 with the crushable tube 41. The bumper 40 can travel over the full length of the crushable tube 41 under a low force, as required when impacting the leg of a pedestrian or a stationary object at low speed. A crush can as shown in Fig3 can also be employed to give two levels of energy absorption.

Fig 4c shows the situation at a collision with high velocity V2. Due to the high velocity the deceleration will be high. The annular mass 45 will remain in position in space, but the crushable tube 41 and the steel rings 44 will move, so the annular mass 45 will be forced against the steel rings, which will flatten out and therefore increase their diameter. Notches in the extension 46 of the mounting tube 42 engage the flattened steel rings 44, and thus the crushable tube 41 is locked with the mounting tube 42. Fig 4d shows that thereafter the crushable tube 41 (and the bumper 40) absorbs crash energy by folding and bending.

Fig 5a shows an elaboration of the device shown in Figures 3 and 4. Fig 5a shows attached to a bumper beam 40 a crushable tube 51 that can slide freely over a mounting tube 52 which is connected to a vehicle. A sliding plate mechanism 53 is arranged at the connection between the crushable tube 51 and the mounting tube 52. The tubular extension to a conical wedge 54 is free to slide in a housing 57, which is attached to the mounting tube 52 the conical wedge is kept in place by a spring 58. An actuation rod 55 connects the bumper fascia moulding, 56 with the conical wedge via push rod 59. The actuation rod 55 will buckle when the compressive force on this rod is above the Euler load of the actuation rod. Fig.5a shows the situation during normal use of the vehicle.

Fig 5b shows this situation when the velocity V1 is low and the deceleration is thus low as well. The actuation rod 55 buckles, but the sliding plates 53 do not engage the mounting tube 52 and so the crushable tube 51 slides freely over the mounting tube 52.

Fig 5b also illustrates the situation when the vehicle bumper strikes the leg of a pedestrian, this could occur at a high velocity such as V2. In this case the mass of the impacting leg is low enough to cause very little compression of the polymer foam 57, the low resultant acceleration rearwards on the system allows the actuation rod to buckle and the crushable tube 51 slides freely over the mounting tube with insignificant force, reducing the likelihood of injury to the pedestrian.

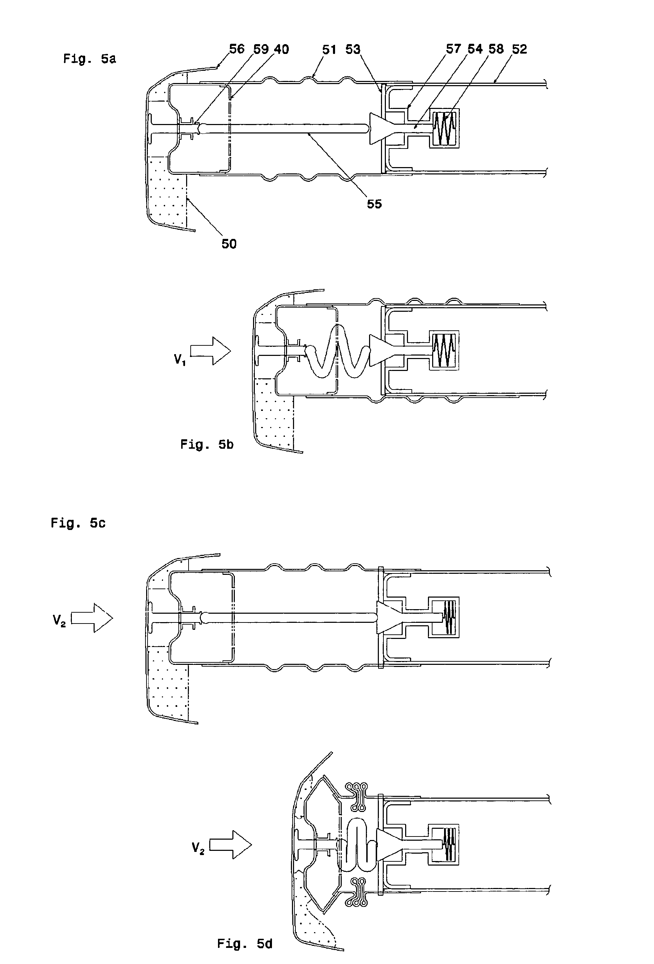

Fig 5c shows what happens when the velocity V2 is high and so the deceleration during a collision is high. Due to the inertia of the actuation rod 55, onset of buckling (i.e. sideways movement) occurs at a higher force, this higher force is great enough to overcome the force of the spring 58, the conical wedge 54 moves into the housing 57, and pushes the sliding plates into engagement with the crushable tube 51. Crushable tube 51 is thus locked and has to crush together with the buckling of the actuation rod 55, as shown in Fig 5d. Above the predetermined crash deceleration the energy absorbing device thus absorbs more energy than below the predetermined crash deceleration.

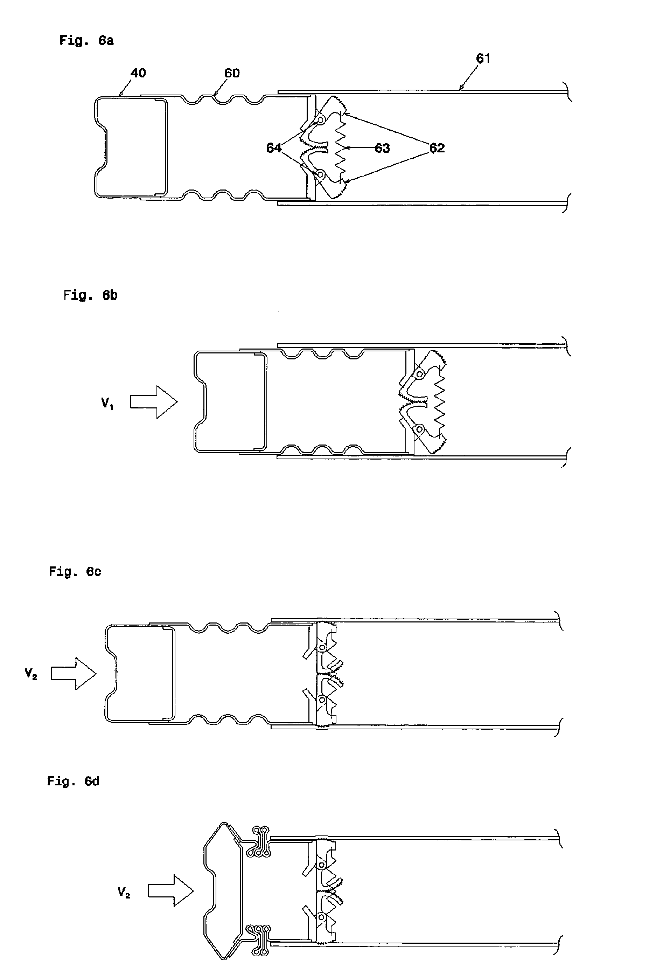

Fig 6a shows an energy absorbing device making use of rotating pawls 62 that rotate around pivots 64 and that are held in position by a tension spring 63. This mechanism is connected to a crushable tube 60 which is attached to a bumper 40 and which can slide inside a mounting tube 61. Fig 6a shows the situation during normal use of the vehicle.

Fig 6b shows that when a collision occurs at low velocity V1 the crushable tube 60 can slide freely into the mounting tube 61. Fig 6c shows that when an accident occurs at high velocity V2, the deceleration will be high and the inertial forces acting on the pawls 62 pull against the force of the tension spring 63 and rotate the pawls around their pivot into engagement with the mounting tube 61. The friction now forces the pawls into a fully rotated position and the crushable tube 60 and the mounting tube 61 are locked. Fig 6d shows that thereafter the crushable tube is fully deformed by folding and bending and thus absorbs a lot of crash energy.

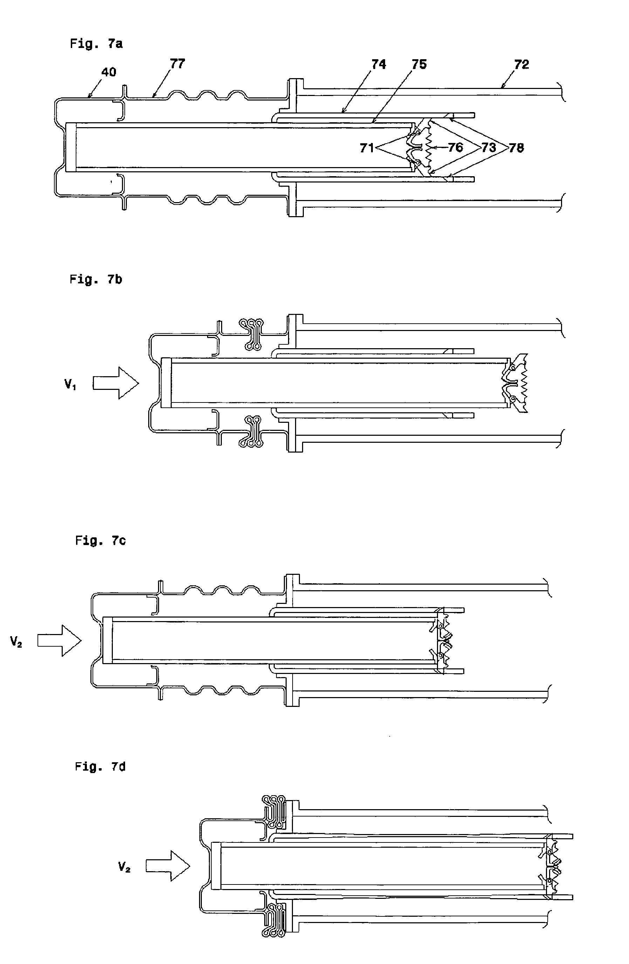

Fig 7a shows an energy absorbing device, similar to 6a, making use of rotating pawls 73 that rotate around pivots 71; these pivots are held in position by a tension spring 76. In this instance the mechanism is attached to an actuation tube 75 which is attached to a bumper 40 and which can slide inside a deformable tube 74.

Fig 7a shows the situation during normal use of the vehicle. Fig 7b shows that when a collision occurs at low velocity V1 the actuation tube 75 can slide freely into the deformable tube 74.

Fig 7c illustrates the behaviour of this device when an accident occurs at a high velocity V2, the deceleration will be high and the inertial forces acting on the pawls 73 pull against the force of the tension spring 76 and rotate the pawls around their pivot into engagement in the slots 78 in the sides of the deformable tube 74.

Fig 7d shows that thereafter the deformable tube absorbs energy by stretching, an energy absorbing method that is most efficient. Fig 7d also demonstrates the crushing of the crush can 77 in a low speed collision. This crush can 77 can be unbolted from the bumper beam 40 and rail 72 and therefore easily replaced at low cost.

The above embodiments all show the energy absorbing device according to the invention, wherein a switching part changes position above a predetermined crash deceleration such that above this deceleration more crash energy is absorbed than below this deceleration. The device according to the invention thus gives minimal damage to the vehicle at low (e.g. parking) speeds as well as good pedestrian safety at low speed and low deceleration, together with good energy absorption at higher speeds. The good energy absorption at higher speeds takes place over a distance that is as long as possible, to diminish the deceleration forces on the occupants of the vehicle as much as possible.

The device according to the invention also reduces the cost of repair of vehicles in the event of low speed collisions, for example concentric tubular elements are free to slide repeatably without damage at speeds associated with parking.

In every case described above (Figs 3 to 7) the deformable, crushable or stretchable tube may be of constant cross section and wall thickness. However it may be preferred to use tube that has varying cross section and/or varying wall thickness along its length. Such tubes provide a predetermined increase or decrease in energy of energy absorption capacity along their length, and therefore provide a means of tuning the deceleration forces on the occupants in a crash. Tubes with varying wall thickness and varying diameter are known as tailored tubes and conical tubes.

The device according the invention make sensors and the accompanying cables et cetera redundant; however, it is possible to install these to switch the switching part above a predetermined speed or in predetermined places, for instance outside cities and other built-up areas, using satellite or GSM navigation. It is also possible to switch the switching part using sensing by radar, ultrasound or infrared. In this way a kind of hybrid system is provided.

The device according to the invention has the further advantage that it will work when the vehicle fitted with the device is stationary and hit by another vehicle. The change in velocity of the vehicle that was stationary will activate its device. If the stationary vehicle would have had a sensor system activated by the speed of the stationary vehicle, the device would not have been activated.

It will be understood that the above embodiment may be altered without departing from the spirit of the invention. For instance, instead of tubes other elongated elements could be used such as elements consisting of two or more elements having polygonal cross section.

It will also be apparent for the skilled person that the device according to the invention could be used for other transportation means besides vehicles such as automobiles. For instance the device could be used as an emergency energy absorber on a lift (elevator), or in the buffer system of a train. In these case the device can work equally well attached to the vehicle (lift, train) or be fixed (bottom of the lift shaft, in a fixed buffer at the end of a railway line.

It will also be apparent for the skilled person that a device that relies on inertia to switch an energy absorbing element can be engineered to work at the more extreme velocities encountered with ballistic and blast forces, e.g. from terrorist activity or from industrial accident. One example is the use of a device according to this invention to limit the forces transmitted to a military vehicle (truck, APC or tank) structure through the suspension members when hit by a land mine.

## Claims

1. Device for absorbing energy during crash of a transportation means, such as an automobile, **characterised in that** the device comprises a switching part which has been designed and fabricated such that it changes position in the device above a predetermined crash deceleration due to the inertia of the switching part, resulting in the device absorbing less energy at a crash deceleration below the predetermined crash deceleration than above the predetermined crash deceleration.

2. Device according to claim 1, wherein the device comprises two elongated elements that are free to slide relative to one another, the switching part being attached to one of the elements such that above the predetermined crash deceleration the two elements are coupled by the switching part and one or both of the elements deform.

3. Device according to claim 2, wherein one of the elongated elements is connected to the front of the transportation means and the other elongated element is connected to a passenger compartment of the transportation means.

4. Device according to claims 2 or 3, wherein the elongated elements are concentric tubular elements.

5. Device according to claim 2, 3 or 4, wherein the switching part comprises locking pawls which are attached to one of the elements by a spring-like mechanism, the locking pawls being pushed in locking engagement with the other element above the predetermined crash deceleration.

6. Device according to claim 5, wherein a sloping surface on the one element is present for guiding the locking pawls.

7. Device according to claim 6, wherein a pivot on the one element is present for rotatably guiding the locking pawls.

8. Device according to claim 2, 3 or 4, wherein the switching part comprises spring disks and a slidable ring on one of the elements, the spring disks being pushed into locking engagement with the other element by the slidable ring above the predetermined crash deceleration.

9. Device according to claim 1, wherein the device comprises two elongated elements that are free to slide relative to one another, the switching part being attached to one of the elements such that above the predetermined crash deceleration the other element is plastically deformed by the switching part.

10. Device according to claim 9, wherein one of the elongated elements is connected to the front of the transportation means and the other elongated element is connected to a passenger compartment of the transportation means.

11. Device according to claims 9 or 10, wherein the elongated elements are concentric tubular elements.

12. Device according to claim 9, 10 or 11, wherein the switching part comprises rigid punch elements and a slidable ring on one of the elongated elements, the rigid punch elements being pushed into the other element by the slidable ring above the predetermined crash deceleration to deform the other element during the sliding of the two elongated elements.

13. Device according to claim 12, wherein the rigid punch elements are balls, preferably steel balls.

14. Device according to claim 12 or 13, wherein a sloping surface on the one element is present for guiding the rigid punch elements.

15. Device according to any one of the claims 2 - 14, wherein a plastically deformable element has been placed between the two elongated elements so as to deform below the predetermined crash deceleration.

16. Device according to any one of the claims 2 - 15, wherein at least one of the elongated elements is a tube of high strength/high ductility steel which is stretched during the absorption of energy, preferably the high strength/high ductility steel being HSD steel.

17. Device according to any one of the claims 2 - 16, wherein at least one elongated elements is essentially tubular, having a variable cross section along its length.

18. Device according to any one of the claims 2 - 16, wherein at least one of the elongated elements is essentially tubular, having a variable wall thickness along its length.

19. Device according to any one of the preceding claims, wherein an electrical switching system is provided to initialize the locking part to change position.

20. Device according to claim 19, wherein the electrical switching system has been installed to be controlled by the speed of the transportation means.

21. Device according to claim 19, wherein the electrical switching system has been installed to be controlled by a sensing system using satellite, GSM navigation, radar, ultrasound or infrared.

22. Device according to any one of the claims 19 - 21, wherein the electrical switching system uses stored power already present in the transportation means, e.g. within the braking or ABS system, within the air conditioning circuit or by means of air pressure stored in the spare wheel.

23. Device according to any one of the claims 19 - 21, wherein the electrical switching system has at least two settings allowing for at least two levels of energy absorption by the switching system.

24. Transportation means, such as an automobile, provided with the device according to any one of the preceding claims.
